# EUROPÄISCHE PATENTSCHRIFT

(11) **EP 1 034 093 B1**
(45) Veröffentlichungstag und Bekanntmachung des Hinweises auf die Patenterteilung: **10.05.2006**
(21) Anmeldenummer: 98964424.0
(22) Anmeldetag: 20.11.1998
(51) Int. Cl.: G06F 9/445

(54) **VERSORGEN VON KRAFTFAHRZEUGEN MIT DATEN**
SUPPLY OF DATA TO MOTOR VEHICLES
FOURNITURE DE DONNEES A DES VEHICULES AUTOMOBILES

(30) Priorität: 27.11.1997 DE 19752488; 17.11.1998 DE 19853000
(43) Veröffentlichungstag der Anmeldung: 13.09.2000
(73) Patentinhaber: Continental Teves AG & Co. oHG, 60488 Frankfurt (DE)
(72) Erfinder: FENNEL, Helmut, D-65812 Bad Soden (DE)
(86) Internationale Anmeldenummer: PCT/EP1998/007486
(87) Internationale Veröffentlichungsnummer: WO 1999/028160

(56) Entgegenhaltungen:
- DE-A- 4 401 660
- DE-C- 19 619 643
- GB-A- 2 263 376
- GB-A- 2 273 580
- US-A- 5 619 412
- US-A- 5 661 651

## Beschreibung

Die Erfindung bezieht sich auf ein Verfahren zum Versorgen von Kraftfahrzeugen mit Daten, gemäss dem Oberbegriff des Anspruchs 1.

Zur Erhöhung der Sicherheit und des Fahrkomforts von Kraftfahrzeugen werden in zunehmendem Maße elektronische Regelungs- und Steuerungssystem, Überwachungs-, Warn, Leitsysteme usw. in die einzelnen Fahrzeuge installiert. Die Funktion solcher Systeme beruht vornehmlich auf Datenverarbeitung, weshalb dem Laden der Daten, der Datenaktualisierung, dem Datenaustausch, der Überwachung der einzelnen Vorgänge große Bedeutung zukommt.

Das Laden der Regelungsprogramme gehört zur Fertigung des Fahrzeugs. Das Überwachen solcher Daten, das Aktualisieren der Programme, das Auslesen von Verschleißdaten etc. geschieht im Rahmen von Reparaturen oder Wartungsarbeiten in den Werkstätten, die hierzu mit entsprechenden Diagnosegeräten, Datenübertragungseinrichtungen und Computern ausgerüstet sind. Der Austausch der Daten und deren Auswertung ist den Fachleuten in den Werkstätten vorbehalten.

Document DE-A- 4401660 offenbart den Oberbegriff des Anspruchs 1.

Aus der GB-A-2 273 580 geht ein Verfahren zum Versorgen von Kraftfahrzeugen mit Daten, die zum Betrieb, zur Überwachung und/oder Wartung von Kraftfahrzeugen dienen. Die Datenübertragung wird zwischen einem Sende-Empfänger im Fahrzeug und einer Zentrale mit Hilfe von drahtlosen Datenübertragungseinrichtungen durchgeführt.

Die GB-A-2 263 376 beschreibt ebenfalls ein Verfahren zum Versorgen von Kraftfahrzeugen mit Daten. In diesem Dokument können die Übertragbaren Daten neben anderen Daten auch Informationen über den Verschleißzustand der Bremsen in einem Motorsteuergerät enthalten. Es können jedoch keine Programme oder Unterprogramme übertragen werden.

Der Erfindung liegt nun die Aufgabe zugrunde, ein Verfahren zu entwickeln, das ein von den Service-Intervallen und Werkstattbesuchen unabhängiges Kommunizieren mit der Elektronik des Fahrzeugs, nämlich ein von den Werkstattbesuchen unabhängiges Erfassen, Auswerten, Austauschen und Aktualisieren der verschiedenen Daten und Programme zuläßt.

Dieses zusätzliche und häufigere Kommunizieren zwischen der installierten Elektronik und externen Überwachungs- oder Serviceeinrichtungen sollte für den Fahrzeughalter möglichst unbemerkt geschehen. So kann z.B. bei einer eventuell notwendigen Programmänderung einer elektronischen Komponente des Kraftfahrzeugs eine Rückrufaktion vermieden werden.

Es hat sich nun herausgestellt, daß diese Aufgabe mit einem Verfahren der eingangs genannten Art gelöst werden kann, dessen Besonderheit darin besteht, daß in regelmäßigen und individuell festlegbaren Zeitabständen die Datenübertragung mit Hilfe von drahtlosen Kommunikationseinrichtungen, die in naher Zukunft zur Grundausstattung jedes Fahrzeugs gehören werden, durchgeführt wird.

Unabhängig von den Service-Intervallen und ohne zusätzlichen Zeitaufwand wird erfindungsgemäß in regelmäßigen Zeitabständen eine Datenübertragung durchgeführt, die in unterschiedlicher Weise und zu verschiedenartigem Nutzen ausgewertet werden kann. Dies geschieht unbemerkt von dem Fahrer und für ihn ohne zusätzlichen Zeitaufwand. Während unkritischer Betriebszustände findet eine Kommunikation zwischen den elektronischen Systemen des Fahrzeugs und den externen Überwachungseinrichtungen, mit denen das Fahrzeug durch die drahtlose Kommunikationseinrichtung - je nach Realisierung der Erfindung - über Online mit Servicestellen, dem Werk, dem Fahrzeughersteller usw. verbunden wird (Werk = Fahrzeughersteller).

Die Datenübertragung geschieht grundsätzlich in beiden Richtungen. Auf diese Weise können z.B. Parametersätze oder komplette Software-Programme in die Fahrzeugelektronik geladen werden, wenn die einzelnen Steuergeräte über entsprechende Datenspeicher etc. verfügen.

Nach einem vorteilhaften Ausführungsbeispiel der Erfindung werden durch eine drahtlose Übertragungseinrichtung Daten übertragen, abgefragt oder ausgetauscht, die eine oder mehrere der folgenden Informationen wiedergeben:
- technische Diagnose oder Analyse des Bremssystems, des Fahrwerks, des elektrischen Systems, eines oder mehrerer Fahrzeug-Regelungssysteme, des Antriebsmotors, insbesondere Informationen über
- den Luftdruck der einzelnen Räder,
- den Ölstand im Antriebsmotor,
- die Bremsbelagstärke etc.

Auf diese Weise wird das Fahrzeug überwacht.

Das erfindungsgemäße Verfahren macht es auch möglich, Informationen über den Verschleiß bestimmter Bauteile, z.B. der Bremsbeläge, die Art des zuletzt getankten Treibstoffs, die und andere Daten dem Fahrzeug und insbesondere den elektronischen Steuerungssystemen wie z.B. einem elektronischen Stabilitätssystem oder dem Motormanagement zuzuleiten und dadurch automatisch die Bremsen oder Motorsteuerung den Gegebenheiten anzupassen.

Wird eine Abweichung vom vorgegebenen Reifen-Solldruck bei der Datenübermittlung während des Datenaustauschs festgestellt, wird dies dem Fahrzeugführer optisch oder akustisch signalisiert. Er wird zur Korrektur des Reifendrucks aufgefordert.

Die erfindungsgemäße Anordnung zur Durchführung des Verfahrens ist als Bestandteil einer drahtlosen Kommunikationseinrichtung ausgebildet und mit einer zusätzlichen Datenübertragungseinrichtung ausgerüstet, die eine im Kraftfahrzeug und installierte Schnittstelle umfaßt, über die der Datenfluß oder Datenaustausch stattfindet. Als Datenübertragungseinrichtung eignet sich eine in dem Kraftfahrzeug installierte Sende- und Empfangseinrichtung, die in beiden Richtungen Daten übertragen kann. Solche Übertragungseinrichtungen basieren zweckmäßigerweise auf einer elektromagnetischen Übertragungsmethode. Die Übertragung kann durch einen im Fahrzeug installierten Sende-Empfänger erfolgen, der die Informationen zu einem terrestrischen oder durch Satelliten aufgebauten Mobilfunknetz überträgt.

Weitere Einzelheiten und Vorteile der Erfindung gehen aus der folgenden Beschreibung eines Ausführungsbeispiels und anhand der beigefügten Abbildungen hervor. Es zeigen:
- Fig. 1: in schematisch vereinfachter Darstellung die grundsätzliche Anordnung der Datenübertragungseinrichtung, und
- Fig. 2: in Form eines Ablaufplans ein Ausführungsbeispiel zur Durchführung des erfindungsgemäßen Verfahrens.

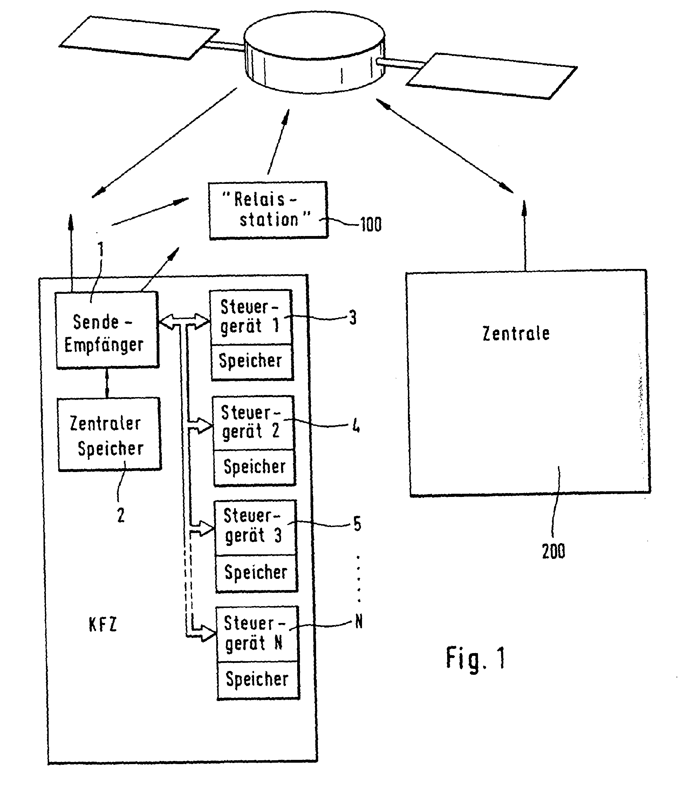

Die Erfindung wird grundsätzlich durch Erweiterung einer drahtlosen Kommunikationseinrichtung mit zusätzlichen Elementen zur Übertragung und Auswertung bestimmter fahrzeugrelevanter Daten realisiert. Dies veranschaulicht Fig. 1, in der symbolisch ein Kraftfahrzeug mit einer Einrichtung zum Übertragen von Daten dargestellt ist.

Das Kraftfahrzeug verfügt über einen Sender-Empfänger (1) und kommuniziert über eine Relaisstation(100), die z.B. ein Satellit sein kann, mit einer Zentrale (200). Der Sender-Empfänger (1) ist mit einen zentralen Speicher (2) verbunden und kann somit die zu sendenden oder empfangenen Daten zwischenspeichern. Dies dient zur genauen Protokollierung des Sendens und Empfangens. Der Sender-Empfänger (1) ist mit einer beliebigen Anzahl von verschiedenen Steuergeräten (3, 4, 5, ... N) verbunden und kann mit diesen bidirektional kommunizieren. Die Steuergeräte (3, 4, 5, ... N) sind mit löschbaren und wiederprogrammierbaren Speichern (3a, 4a, 5a, ... Na) ausgerüstet, in denen sie Informationen über den Zustand jeweils eines Teils des Fahrzeugs speichern. Die gespeicherten Informationen können physikalische Meßgrößen oder auch gesamte Programmanweisungen für die betreffenden Bauteile sein. Während unkritischer Betriebszustände, also wenn auf den Datenbestand der Steuergeräte nicht zurückgegriffen werden muß und die Betriebssicherheit und fehlerfreie Funktionsweise nicht gefährdet ist, können die Daten in den Steuergeräten (3, 4, 5, ... N) verändert werden. Dies umfaßt sowohl das Auslesen, aber auch das Einlesen neuer Daten. Ebenso wie der Sende-Empfänger (1) werden die Steuergeräte (3, 4, 5, ... N) elektronisch codiert,um eine eindeutige Adressierung beim Datenaustausch zu gewährleisten.

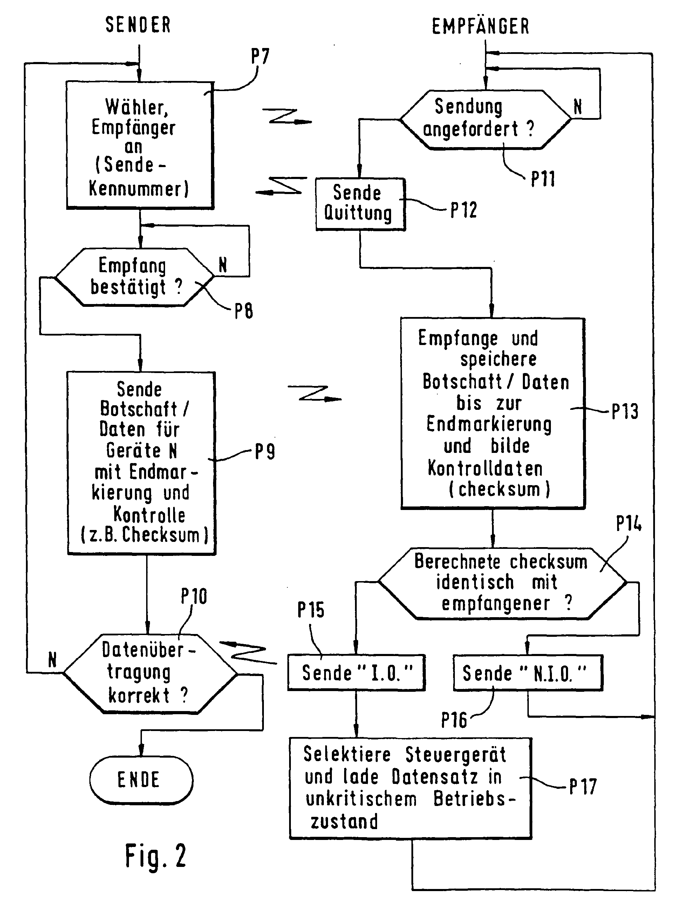

Eine Möglichkeit des Sendens von Daten bei gleichzeitiger Gewährleistung der Datensicherheit zeigt Fig. 2. Mit einem solchen Verfahren ist es möglich, bereits vorprogrammierte Funktionen "freizuschalten" oder Verbesserungen in Form eines "on-line updates" einzuführen.

Die auf der linken Seite in Fig. 2 dargestellten Elemente beschreiben den Ablaufplan einer Zentrale (200), die Daten in zum Sende-Empfänger (1), dargestellt rechts in Fig. 2, sendet. Im Programmschritt (P7) wählt dazu die Zentrale (200) einen Empfänger anhand eines Verzeichnisses aus und fordert eine Sendung an. Der Sende-Empfänger (1) wartet in Bereitschaftsstellung auf die Anforderung der Sendung (P11) und sendet bei erfolgter Übermittlung eine Sendequittung (P12) an die Zentrale (200). Im Falle eines fehlerfreien Empfangs der Sendequittung (P12) wird in der Zentrale der Empfang bestätigt (P8) und die Zentrale (200) sendet die Botschaft oder die Daten, die mit einer zusätzliche Kennung für das Steuergerät (3, 4, 5...N) und mit einer Endmarkierung versehen sind (P9). Diese zusätzlichen Kennungen können in Form einer Checksumme ausgebildet sein. Der Sende-Empfänger (1) befindet sich nun in Empfangsbereitschaft und speichert im zentralen Speicher (2) die Daten, bis die Endmarkierung übermittelt wurde (P13). Daraufhin wird die Kennung vom Sende-Empfänger (1) berechnet (P14) und es erfolgt eine Meldung an die Zentrale (200). Im Falle einer nicht fehlerfrei erkannten Kennung wird der Zentrale (200) eine Negativmeldung übermittelt (P16) und ein erneutes Senden der Daten angefordert. Im Falle einer richtigen Kennung wird ebenfalls eine Mitteilung an die Zentrale (200) gesendet und der fehlerfreie Empfang bestätigt (P16). Daraufhin selektiert der Sende-Empfänger (1) das für die übertragenen Daten ausgewählte Steuergerät (3, 4, 5, ... N) und übermittelt diesem die Daten während eines unkritischen Betriebszustands.

Neben dem hier genauer dargestellten Ausführungsbeispiel besteht selbstverständlich auch die Möglichkeit der Übermittlung von Daten vom der Sende-Empfänger (1) an die Zentrale (200). Dabei ist es z.B. möglich mittels der Sensoren, welche sich im Fahrzeug befinden, oder auch mittels der Verschleißmodelle, die z.B. den Bremsbelagverschleiß, Ölwechselintervalle etc. errechnen.

Es versteht sich von selbst, daß die dargestellte Prozedur nur eine von zahlreichen Verknüpfungen, Möglichkeiten zur Auswertung oder Signallaufplänen wiedergibt. Wichtig ist, daß aus den übertragenen und ausgewerteten Informationen die geeigneten Maßnahmen zur Fehlererkennung, Fehlersignalisierung und, wenn möglich Fehlerbehebung ausgelöst werden.

### Bezugszeichenliste

- 1: Sende-Empfänger
- 2: Zentraler Speicher
- 3,4,5...N: Steuergerät
- 3,4,5...N: Speicher
- 100: Relaisstation
- 200: Zentrale
- P7: Wähler, Empfänger an (Sende-Kennummer)
- P8: "Empfang bestätigt ?''
- P9: Sende Botschaft/Daten für Geräte N mit Endmarkierung und Kontrolle
- P10: "Datenübertragung korrekt ?"
- P11: "Sendung angefordert ?"
- P12: Sende Quittung !
- P13: Empfange und speichere Botschaft/Daten bis zur Endmarkierung und bilde Kontrolldaten (checksum)!
- P14: Berechnete checksum identisch mit empfangener ?
- P15: Sende "i.O.''
- P16: Sende "n.i.o."
- P17: Selektiere Steuergerät und lade Datensatz in unkritischem Betriebszustand

## Patentansprüche

1. Verfahren zum Versorgen von Kraftfahrzeugen mit Daten, die zum Betrieb, zur Überwachung und/oder Wartung von geregelten Kfz-Hremsanlagen und anderen Kfz-Regelungs-oder Steuerungssystemen, dienen, zum Austausch von Daten und/oder zum Abfragen, Ändern, Aktualisieren von Daten dieser Art, wobei die Datenübertragung zwischen einem Sende-Empfänger (1) in einem Fahrzeug und einer Zentrale (200) mit Hilfe von drahtlosen Datenübertragungseinrichtungen durchgeführt wird, **dadurch gekennzeichnet, dass** über die Datenübertragungseinrichtung vollständige Programme und/oder Unterprogramme von der Zentralen (200) zum Kraftfahrzeug übertragen und im Kraftfahrzeug installiert und gespeichert werden, wobei die Datenübertragung während unkritischer Betriebszustände erfolgt, wenn auf den Datenbestand der Steuergeräte nicht zurückgegriffen werden muß und die Betriebssicherheit und fehlerfreie Funktionsweise nicht gefährdet ist, und dass in regelmäßigen, insbesondere regelmäßigen und individuell festlegbaren Zeitabständen die Datenübertragung durchgeführt wird.

2. Verfahren nach Anspruch 1, **dadurch gekennzeichnet, dass** bekannte/übliche Kommunikations- und/oder Navigationskanäle zur Datenübertragung eingesetzt werden.

3. Verfahren nach Anspruch 1 oder 2, **dadurch gekennzeichnet, dass** diese einen oder mehrere Relaisstationen (100) als zusätzliche Datenübertragungseinrichtung und eine im Kraftfahrzeug installierten Schnittstelle umfaßt, über welche die Programme und/oder Unterprogramme von/zu dem Kraftfahrzeug übertragbar sind.

## Claims

1. Method for supplying motor vehicles with data which is used to operate, monitor and/or maintain closed-loop controlled motor vehicle brake systems and other motor vehicle closed-loop or open-loop control systems, for exchanging data and/or for interrogating, modifying, updating data of this type, wherein the data is transmitted between a transceiver (1) in a vehicle and a control centre (200) using wire-free data transmission devices, **characterized in that** complete programs and/or subprograms are transmitted from the control centre (200) to the motor vehicle and are installed and stored in the motor vehicle by means of the data transmission device, and wherein the data is transmitted during noncritical operating states if it is not necessary to have recourse to the data stock of the control units and the operational reliability and fault-free method of operation is not at risk, and **in that** the data is transmitted at regular, in particular regular and individually definable, time intervals.

2. Method according to Claim 1, **characterized in that** known/customary communications and/or navigation channels are used for transmitting the data.

3. Method according to Claim 1 or 2, **characterized in that** the latter comprises one or more relay stations (100) as additional data transmission device and an interface which is installed in the motor vehicle, via which the programs and/or subprograms can be transmitted from/to the motor vehicle.

## Revendications

1. Procédé pour approvisionner des véhicules automobiles en données qui servent au fonctionnement, à la surveillance et/ou à la maintenance des équipements de freinage régulés pour véhicule automobile et d'autres systèmes de commande ou de régulation pour véhicule automobile, pour échanger des données et/ou pour interroger, modifier, mettre à jour des données de ce type, la transmission des données entre un émetteur-récepteur (1) dans un véhicule et une centrale (200) étant effectuée à l'aide de dispositifs de transmission de données sans fil, **caractérisé en ce que** des programmes et/ou sous-programmes complets sont transmis par le biais du dispositif de transmission de données de la centrale (200) au véhicule automobile et sont installés puis enregistrés dans le véhicule automobile, la transmission de données s'effectuant pendant des situations de fonctionnement non critiques, s'il ne faut pas accéder à l'ensemble des données des appareils de commande et si la sécurité opérationnelle ainsi que le fonctionnement sans défaut ne sont pas menacés, et que la transmission de données est effectuée à intervalles réguliers, notamment à intervalles réguliers et pouvant être personnalisés.

2. Procédé selon la revendication 1, **caractérisé en ce que** les canaux de communication et/ou de navigation connus/habituels sont utilisés pour la transmission de données.

3. Procédé selon la revendication 1 ou 2, **caractérisé en ce que** celui-ci comprend une ou plusieurs stations relais (100) en tant que dispositif de transmission de données supplémentaire ainsi qu'une interface installée dans le véhicule automobile par le biais de laquelle les programmes et/ou les sous-programmes peuvent être transmis depuis/vers le véhicule automobile.
